# EUROPÄISCHE PATENTANMELDUNG

(11) **EP 1 591 012 A1**
(43) Veröffentlichungstag der Anmeldung: **02.11.2005**
(21) Anmeldenummer: 05007700.7
(22) Anmeldetag: 08.04.2005
(51) Int. Cl.: A21B 1/26, F24C 15/34

(54) **Backofen, insbesondere für eine mobile Feldküche**

(30) Priorität: 30.04.2004 DE 202004007206 U
(71) Anmelder: Alfred Kärcher GmbH & Co. KG, 71364 Winnenden (DE)
(72) Erfinder: Moser, Michael, 74420 Oberrot-Hausen (DE); Merz, Erwin, 71334 Waiblingen (DE)
(74) Vertreter: Duhme, Torsten

(57) **Zusammenfassung**

Ein Backofen, der insbesondere für die Verwendung in einer mobilen Feldküche ausgebildet ist, besitzt einen Backraum (14) zur Aufnahme von Gargut und einen Brenner (28) als Heizquelle zum Aufheizen des Backraums (14). Dabei sind flammenführende Teile des Brenners (28) im Innenraum (26) einer vom Backraum (14) räumlich getrennten Brennkammer (24) angeordnet. Gemäß einem Aspekt der Erfindung ist der Innenraum (26) mit einem ersten Keramikmaterial (46) ausgekleidet (Fig. 1).

## Beschreibung

Die vorliegende Erfindung betrifft einen Backofen, insbesondere für eine mobile Feldküche, mit einem Backraum zur Aufnahme von Gargut und mit einem Brenner als Heizquelle zum Aufheizen des Backraums, wobei flammenführende Teile des Brenners im Innenraum einer vom Backraum räumlich getrennten Brennkammer angeordnet sind.

Ein solcher Backofen ist beispielsweise aus US 4,032,289 oder US 3,973,551 bekannt.

Mobile Feldküchen werden vor allem dann benötigt, wenn eine große Anzahl von Menschen über einen längeren Zeitraum hinweg abseits der Zivilisation verpflegt werden soll. Klassische Anwendungsfälle sind militärische Übungen oder Einsätze von größeren Truppenverbänden, aber auch humanitäre Einsätze, beispielsweise bei der Katastrophenhilfe in einem Erdbebengebiet. Die Feldküchen müssen für derartige Einsätze sehr robust ausgebildet sein, damit sie auch unter rauen Betriebsbedingungen und nach häufigem Auf- und Abbau zuverlässig funktionieren. Andererseits sollen sie eine professionelle und abwechslungsreiche Zubereitung von Speisen ermöglichen, um eine Verpflegung auch über längere Zeiträume attraktiv zu gestalten. Eine "gut" ausgestattete Feldküche beinhaltet daher in aller Regel zumindest einen Backofen, der die genannten Anforderungen erfüllen muss.

Die vorliegende Anmelderin bietet entsprechende Backöfen und damit ausgerüstete mobile Feldküchen bereits seit einiger Zeit an. Typischerweise sind die Backöfen mit einer als Brenner ausgebildeten Heizquelle ausgerüstet, da elektrisch betriebene Heizquellen im Hinblick auf die Mobilität und die wechselnden Einsatzanforderungen Nachteile aufweisen. Die verwendeten Brenner können beispielsweise mit Dieselkraftstoff, wie er auch für die zum Transport benötigten Kraftfahrzeuge verwendet wird, oder auch mit anderen Brennstoffen, wie etwa Gas, betrieben werden. Häufig werden auch sogenannte Vielstoffbrenner eingesetzt, die mit verschiedenen Arten von Brennstoffen betrieben werden können. Wie auch aus den beiden eingangs genannten US-Druckschriften ist es dabei bekannt, zumindest die flammenführenden Teile des Brenners in einer vom Backraum des Backofens abgesetzten Brennkammer anzuordnen, so dass die im Backraum gegarten Speisen vor dem direkten Zugriff der Flammen geschützt sind.

Bei den bislang bekannten Backöfen für mobile Anwendungen sind regelmäßige Wartungen und Instandsetzungen erforderlich, da die Bestandteile des Heizkreises aufgrund der wechselnden thermischen Belastung und aufgrund der teilweise rauen Umgebungsbedingungen (wechselnde Brennstoffe, Brennstoffe mit Verunreinigungen und/oder minderer Qualität, Einsatz in sehr heißen/kalten Gebieten, mechanische Belastungen durch häufigen Auf-/Abbau und Transport etc.) einem erhöhten Verschleiß unterliegen. Der entsprechende Wartungsaufwand schlägt sich nachteilig bei den Betriebskosten der bekannten Backöfen nieder.

Aus einem ganz anderen Bereich, nämlich bei brennstoffbetriebenen Heizgeräten oder Heizanlagen, ist es bekannt, für eine den Brenner umgebende Brennkammer Keramikmaterial zu verwenden. DE 33 41 490 A1 offenbart beispielsweise eine brennstoffbetriebene Fahrzeugzusatz- oder Standheizung, bei der das die Brennkammer begrenzende Brennrohr aus Keramikmaterial hergestellt ist. Ein solches aus Keramikmaterial bestehende Brennrohr ist jedoch teuer und besitzt außerdem den Nachteil, dass die Befestigung des Brennrohrs innerhalb des Heizgerätes schwierig ist.

Zur Vermeidung dieser Nachteile ist in DE 199 34 488 A1 ein Brenner für eine Fahrzeugzusatz- bzw. Standheizung vorgeschlagen, wobei aus metallischem Werkstoff bestehende Bestandteile der Brennkammer, welche der Flamme des Brenners ausgesetzt sind, zumindest teilweise mit Keramikmaterial beschichtet sind. Hierbei handelt es sich um eine dünne, nur bereichsweise ausgebildete Beschichtung an den Innenwänden der Brennkammer.

Aus DE 41 30 071 A1 ist es bekannt, die Innenwände eines Heizschachtes zum Abführen der Brenngase eines Brenners mit einer Auskleidung aus Keramik zu versehen, um ein zu schnelles Abkühlen der Brenngase zu verhindern. Damit soll erreicht werden, dass die Brenngase besser ausbrennen, so dass unverbrannte Kohlenwasserstoffe weitgehend vermieden werden und die Umwelt weniger mit Schadstoffen belastet wird.

Vor diesem Hintergrund ist es eine Aufgabe der vorliegenden Erfindung, einen Backofen der eingangs genannten Art anzugeben, der einen geringeren Wartungsaufwand erfordert und somit eine Reduzierung der Betriebskosten ermöglicht.

Diese Aufgabe wird gemäß einem Aspekt der Erfindung durch einen Backofen der eingangs genannten Art gelöst, bei dem der Innenraum mit einem ersten Keramikmaterial ausgekleidet ist.

Im Gegensatz dazu bestehen die Innenwände der Brennkammern bei den bekannten Backöfen typischerweise aus Stahl. Die Stahloberfläche ist den Flammen des Brenners direkt ausgesetzt. Unter den hohen und wechselnden thermischen Belastungen kann dies dazu führen, dass die Innenwände der Brennkammer verzundern und durch die weiteren Belastungen schnell löchrig werden. Da die Flammen des Brenners in diesem Fall aus der Brennkammer herausschlagen können, muss die Brennkammer auf derartige Schäden regelmäßig überprüft werden und ggf. muss die Brennkammer für den weiteren Betrieb des Backofens ersetzt werden. Sowohl die regelmäßige Überprüfung als auch der Austausch der Brennkammer tragen zu den hohen Betriebskosten bei. Durch die Auskleidung des Innenraums mit einem Keramikmaterial kann das Verzundern der Stahlwände verhindert werden. Damit kann der Aufwand für Wartung und Instandsetzung reduziert werden, was sich günstig auf die Betriebskosten des Backofens auswirkt. Darüber hinaus besitzt der neue Backofen eine längere Einsatzzeit, so dass ggf. weniger Ersatzteile für einen Einsatz mitgeführt werden müssen. Dementsprechend eignet sich der neue Backofen besonders gut für die Verwendung in einer mobilen Feldküche, da der logistische Aufwand reduziert ist. Auch dies trägt zu einer Verringerung der Betriebskosten bei.

Die genannte Aufgabe ist daher vollständig gelöst.

In einer bevorzugten Ausgestaltung ist die Brennkammer als modulartiges Austauschteil ausgebildet.

In dieser Ausgestaltung ist die Brennkammer eine in sich kompakte Baugruppe innerhalb des neuen Backofens, die mit relativ einfachen handwerklichen Maßnahmen ausgetauscht werden kann. Im Gegensatz dazu sind die Brennkammern bei den Backöfen aus den beiden eingangs genannten US-Druckschriften integraler Bestandteil der Gehäusekonstruktion. Eine modulartige Entnahme der Brennkammer aus dem Gehäuse der bekannten Backöfen ist nicht möglich. Durch die modulartige Ausbildung der Brennkammer wird deren Austausch im Fall von Beschädigungen, die den Betrieb des Backofens beeinträchtigen, wesentlich erleichtert. Zudem ist der Austausch bei einer eventuell erforderlichen Instandsetzung relativ schnell und ggf. vor Ort, d.h. im Einsatzgebiet, möglich. Dementsprechend werden die Wartungs- und Betriebskosten des neuen Backofens durch diese Ausgestaltung weiter reduziert.

In einer weiteren Ausgestaltung wird der Innenraum der Brennkammer von Keramikplatten umgrenzt, die eine Wandstärke von zumindest 5 mm, bevorzugt von etwa 30 mm bis 50 mm, aufweisen.

In dieser Ausgestaltung besitzt die Brennkammer Innenwände aus dem ersten Keramikmaterial. Es handelt sich also nicht nur um eine vergleichsweise dünne Oberflächenbeschichtung. Die Ausgestaltung besitzt den Vorteil, dass das Keramikmaterial nicht nur einen Oberflächenschutz bietet, sondern die Brennkammer darüber hinaus auch nach außen hin thermisch isoliert. Je dicker die Keramikplatten sind, desto besser ist die thermische Isolierung und desto niedriger sind die Temperaturen außerhalb der Brennkammer. Anderseits ermöglichen die angegebenen Wandstärken einen noch hinreichend kompakten Bauraum und sie stellen daher die bevorzugten Wandstärken für eine praktische Realisierung dar. Diese Ausgestaltung besitzt den Vorteil, dass die außerhalb der Brennkammer angeordneten Komponenten des Backofens thermisch weniger belastet sind und daher einem geringeren Verschleiß unterliegen. Insbesondere Dichtungen, die die Brennkammer nach außen hin abdichten, sind damit langlebiger und/oder kostengünstiger realisierbar. Die Wartungs- und Betriebskosten des neuen Backofens sind noch weiter reduziert.

In einer weiteren Ausgestaltung bilden die Keramikplatten eine selbsttragende innere Brennkammer aus, wobei sie vorzugsweise miteinander verklebt sind.

Diese Ausgestaltung vereinfacht die Herstellung der neuen Brennkammer und trägt damit zu einer günstigeren Herstellung des neuen Backofens bei. Die günstigeren Herstellungskosten führen ebenfalls zu einer Reduzierung der Betriebskosten des neuen Backofens.

In einer weiteren Ausgestaltung ist das erste Keramikmaterial von einem Dämpfungsmaterial umgeben. Bevorzugt besitzt das Dämpfungsmaterial ebenfalls einen Keramikanteil, so dass es sich dann um ein zweites Keramikmaterial im Sinne der vorliegenden Erfindung handelt.

Das zweite Keramikmaterial bzw. Dämpfungsmaterial besitzt eine im Vergleich zum ersten Keramikmaterial höhere Elastizität, also ein niedrigeres Elastizitätsmodul. In einer bevorzugten Ausgestaltung der Erfindung wird für das Dämpfungsmaterial eine Fasermatte verwendet, die unter der Bezeichnung Carbowool® im Handel ist. Hierbei handelt es sich um Fasermatten, die zu etwa zwei Drittel aus SiO₂ und zu etwa einem Drittel aus CaO bestehen (Angaben in Gewichtsprozent). Weitere Bestandteile sind Al₂O₃ und Fe₂O₃.

Die Verwendung des Dämpfungsmaterials schützt die Keramikplatten aus dem ersten Keramikmaterial vor Beschädigungen durch Stöße, Schläge und dergleichen, was insbesondere beim häufigen Transport des Backofens aufgrund seiner bevorzugten Verwendung in einer mobilen Feldküche auftreten kann. Auch Schäden der Keramikplatten durch Vibrationen, die beispielsweise beim Transport des Backofens auf einem Kraftfahrzeug im "rauen" Gelände auftreten können, werden durch die Verwendung des Dämpfungsmaterials vermieden. Dementsprechend sind die Wartungs-und Betriebskosten des neuen Backofens in dieser Ausgestaltung noch weiter reduziert.

In einer weiteren Ausgestaltung weist die Brennkammer einen geschlossenen ersten Stahlmantel auf.

Es versteht sich, dass ein geschlossener Stahlmantel eine Öffnung besitzen muss, durch die der Brenner in die Brennkammer hineinragt oder mit Brennstoff versorgt wird, wenn der Brenner vollständig in der Brennkammer angeordnet ist. Des weiteren kann zumindest eine Ausgangsöffnung vorhanden sein, durch die Abgase aus der Brennkammer nach außen geführt werden. Abgesehen von derartigen "funktionsbedingten" Öffnungen ist der Stahlmantel in dieser Ausgestaltung der Erfindung jedoch vollständig geschlossen. Dies besitzt den Vorteil, dass das Heizsystem des Backofens von anderen Komponenten des Backofens getrennt ist. Insbesondere wird verhindert, dass Rauchgase in den Backraum eintreten können. Der neue Backoffen ermöglicht damit auf zuverlässige Weise die Zubereitung von Speisen, wie mit einem elektrisch betriebenen Backofen. Im Vergleich zu einer Brennkammer ohne entsprechenden Stahlmantel wird die Rauchgasdichtheit auf kostengünstige Weise verbessert.

In einer weiteren Ausgestaltung ist das Dämpfungsmaterial zwischen dem ersten Keramikmaterial und dem ersten Stahlmantel angeordnet, und zwar vorzugsweise raumfüllend.

In dieser Ausgestaltung wird das erste Keramikmaterial noch besser gegen Beschädigungen durch mechanische Einflüsse wie Stöße, Schläge oder Vibrationen geschützt. Die Lebens- und Betriebsdauer des neuen Backofens ist noch weiter erhöht. Darüber hinaus kann die Brennkammer des neuen Backofens in dieser Ausgestaltung sehr einfach als modulartiges Austauschteil ausgebildet werden, was mit den bereits genannten Vorteilen verbunden ist.

Eine raumausfüllende Anordnung des Dämpfungsmaterials zwischen dem ersten Keramikmaterial, insbesondere Keramikplatten der oben angegebenen Stärke, und dem ersten Stahlmantel ist besonders bevorzugt, weil die Keramikplatten dann in dem ersten Stahlmantel transportsicher "verpackt" sind und somit optimal gegen Beschädigungen durch mechanische Einflüsse geschützt sind.

In einer weiteren Ausgestaltung weist der erste Stahlmantel zumindest einen Anschlussstutzen zum Anschließen einer Abgasleitung auf.

Alternativ hierzu könnte eine Abgasleitung auch auf andere Weise an die Brennkammer angeschlossen bzw. in deren Innenraum hineingeführt sein. Die Ausbildung eines Anschlussstutzens an dem ersten Stahlmantel vereinfacht die Herstellung des neuen Backofens und trägt damit zu einer Senkung der Produktions- und Betriebskosten bei.

In einer weiteren Ausgestaltung weist der Anschlussstutzen ein oberes freies Ende und ein unteres Ende auf, wobei das untere Ende im Bereich des ersten Stahlmantels liegt.

Diese Ausgestaltung besitzt den Vorteil, dass der Anschlussstutzen nicht in den freien Innenraum der Brennkammer hineinragt und somit den Flammen des Brenners nicht unmittelbar ausgesetzt ist. Die Lebensdauer der neuen Brennkammer wird dadurch weiter erhöht. Andererseits ist diese Konstruktion technisch sehr einfach und kostengünstig zu realisieren, was sich insgesamt vorteilhaft auf die Wartungs- und Betriebskosten des neuen Backofens auswirkt.

In einer weiteren Ausgestaltung besitzt der Backofen zumindest eine Abgasleitung, in die der zumindest eine Anschlussstutzen eingesteckt ist.

Diese Ausgestaltung beinhaltet, dass der zuvor genannte Anschlussstutzen nach außen weisend an dem ersten Stahlmantel angeordnet ist. Diese Ausgestaltung ermöglicht einen sehr einfachen gasdichten Anschluss der Abgasleitung an die Brennkammer. Aufwendige Dichtungsmechanismen können aufgrund dieser Ausgestaltung entfallen, was zu einer weiteren Reduzierung der Produktions- und Wartungskosten beiträgt.

In einer weiteren Ausgestaltung besitzt die Brennkammer einen zweiten Stahlmantel, an dessen Außenseite der Brenner befestigt ist.

Der zweite Stahlmantel ist vorzugsweise getrennt von dem bereits genannten ersten Stahlmantel ausgebildet, d.h. er umgibt den ersten Stahlmantel. Dabei muss der zweite Stahlmantel nicht unbedingt gasdicht geschlossen sein, wenn diese Funktion bereits durch den ersten Stahlmantel erfüllt ist. Die Befestigung des Brenners an der Außenseite des zweiten Stahlmantels ermöglicht es, alle erforderlichen Dichtungen in "kalten" Bereichen anzuordnen. Die Dichtungen unterliegen damit einem geringeren Verschleiß, was die Wartungs- und Betriebskosten weiter reduziert. Dieser Vorteil wird besonders wirkungsvoll erreicht, wenn der zweite Stahlmantel getrennt von dem ersten Stahlmantel ausgebildet ist und zudem über eine weitere Zwischenschicht aus isolierendem und/oder dämpfendem Material, insbesondere der bereits erwähnten Cabowool®, getrennt ist.

In einer weiteren Ausgestaltung besitzt der Backofen eine Abgasleitung, bevorzugt sogar mehrere Abgasleitungen, die von der Brennkammer durch einen Teilbereich des Backraums gasdicht hindurchgeführt ist bzw. sind.

Diese Ausgestaltung ist eine konsequente Fortsetzung des Gedankens, den Backraum des Backofens von den beim Beheizen entstehenden Raugasen freizuhalten. Andererseits zeichnet sich diese Ausgestaltung durch ihren sehr einfachen konstruktiven Aufbau aus und sie besitzt einen guten thermischen Wirkungsgrad. Mit anderen Worten wird der Backraum des Backofens in dieser Ausgestaltung sehr effizient beheizt und der einfach konstruktive Aufbau trägt zu einer weiteren Verringerung der Herstellungs-und Betriebskosten bei.

In einer weitere Ausgestaltung ist die Brennkammer unterhalb des Backraums angeordnet.

Diese Ausgestaltung ist besonders in Kombination mit der vorhergehenden Ausgestaltung bevorzugt, da die Rauchgase aus der Brennkammer dann "von selbst" durch den Backraum geleitet werden. Darüber hinaus führt die aufsteigende Wärme der Brennkammer zu einer zusätzlichen Beheizung des Backraums. Der thermische Wirkungsgrad ist daher besonders gut.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Backofens in einer teilweise geschnittenen Seitenansicht,
- Fig. 2: ein besonders bevorzugtes Ausführungsbeispiel einer Brennkammer für den neuen Backofen gemäß Fig. 1, und
- Fig. 3-5: verschiedene Zwischenstufen bei der Herstellung der bevorzugten Brennkammer aus Fig. 2.

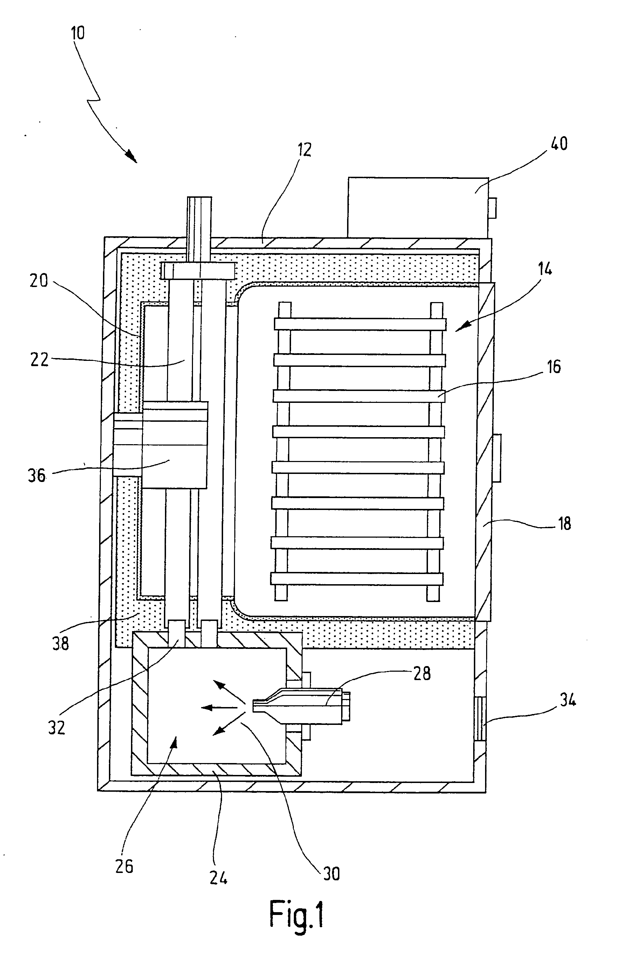

In Fig. 1 ist ein Ausführungsbeispiel des neuen Backofens in seiner Gesamtheit mit der Bezugsziffer 10 bezeichnet.

Der Backofen 10 besitzt ein Gehäuse 12, in dem ein Backraum 14 angeordnet ist. Der Backraum 14 besitzt in an sich bekannter Weise Halter 16 an den Seitenwänden, um Backbleche, Roste oder dergleichen aufzunehmen. Nach vorne hin ist der Backraum 14 durch eine Tür 18 verschlossen. Am entgegengesetzten hinteren Ende (in Fig. 1 links) ist am Backraum 14 ein Kasten 20 ausgebildet, durch den mehrere Abgasrohre 22 hindurchgeführt sind. Backraum 14 und Kasten 20 bilden dabei ein gemeinsames Innenvolumen aus.

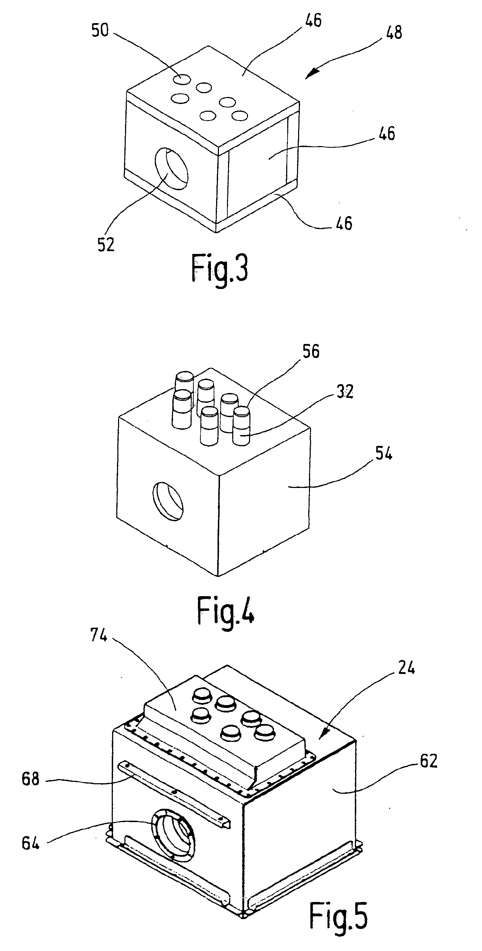

Die Abgasrohre 22 (in einem bevorzugten Ausführungsbeispiel sind es 6 Abgasrohre, wie nachfolgend anhand der Figuren 3 bis 5 zu erkennen ist) führen zu einer Brennkammer 24, die als modulartiges Austauschteil unterhalb des Backraums 14 bzw. des mit ihm verbundenen Kastens 20 angeordnet ist. Die Brennkammer 24 besitzt einen Innenraum 26, in dem die flammenführenden Teile eines Brenners 28 angeordnet sind. Beim Brenner 28 handelt es sich um einen Brenner für Dieselkraftstoff und/oder einen Vielstoffbrenner. Grundsätzlich könnte es sich hier jedoch auch um einen Gasbrenner oder eine andere brennstoffbetriebene Heizquelle handeln. Aus dem Brenner 28 austretende Flammen sind in Fig. 1 vereinfacht durch Pfeile 30 angedeutet.

Abweichend von der Darstellung in Fig. 1 könnte der Brenner 28 auch vollständig in der Brennkammer 27 angeordnet sein. Im Rahmen der vorliegenden Erfindung genügt es jedoch, dass die flammenführenden Teile in der Brennkammer 24 sitzen.

Mit der Bezugsziffer 32 sind Anschlussstutzen bezeichnet, über die die Abgasrohre 22 an die Brennkammer 24 angeschlossen sind. In dem bevorzugten Ausführungsbeispiel ragen die Anschlussstutzen 32 in Stromrichtung der abziehenden Rauchgase in die Abgasrohre 22 hinein.

Das Gehäuse 12 besitzt in diesem Ausführungsbeispiel an seiner Vorderseite unterhalb der Tür 18 einen Lufteinlass 34, durch den der Brenner 28 Verbrennungsluft ansaugen kann. Die Brennstoffversorgung des Brenners 28 ist hier aus Gründen der Übersichtlichkeit nicht näher dargestellt.

Mit der Bezugsziffer 36 ist ein Gebläse bezeichnet, das im rückwärtigen Bereich des Backraums 14, und zwar etwa mittig innerhalb des Kastens 20, angeordnet ist. Das Gebläse 36 dient dazu, die im Backraum 14 vorhandene Luft umzuwälzen. Diese Luft wird durch die Rauchgase, die durch die Abgasrohre 22 nach oben ziehen, aufgeheizt. Mit der Bezugsziffer 38 ist eine Isolierung bezeichnet, die vor allem den Backraum 14 und den daran angeschlossenen Kasten 20 umgibt, um die Wärme möglichst optimal innerhalb des Backraums 14 zu halten.

Mit der Bezugsziffer 40 ist ein Bedienfeld mit entsprechender Steuerelektronik bezeichnet. Über das Bedienfeld 40 wird der Brenner 28 in Betrieb genommen und die gewünschte Gartemperatur im Backraum 14 eingestellt.

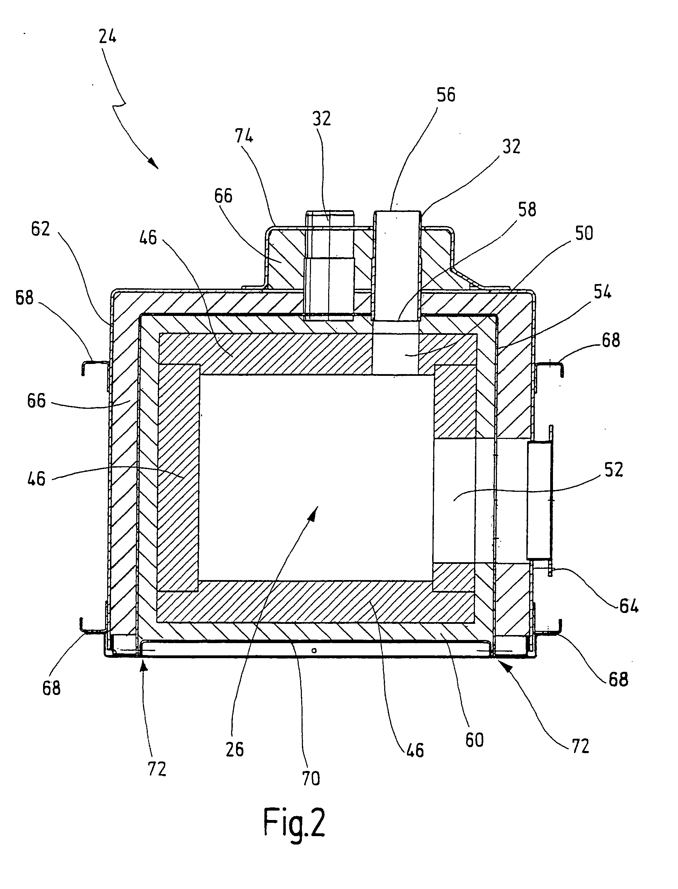

In Fig. 2 ist die Brennkammer des Backofens aus Fig. 1 in weiteren Details dargestellt. Gleiche Bezugszeichen bezeichnen dabei dieselben Elemente wie zuvor. Aus Gründen der Übersichtlichkeit ist in dieser Darstellung jedoch der Brenner 28 weggelassen. Fig. 2 zeigt damit die Brennkammer 24, wie sie als modulartiges Austauschteil zum Einbau in den Backofen 10 verwendet wird.

Der Innenraum 26 der Brennkammer 24 wird von Keramikplatten 46 gebildet, die kastenartig zusammengesetzt und miteinander verklebt sind. Die Keramikplatten 46 bilden damit eine innere Brennkammer, die in der perspektivischen Darstellung der Fig. 3 insgesamt mit der Bezugsziffer 48 bezeichnet ist. Die einzelnen Keramikplatten 46 sind auf Passung zueinander hergestellt, so dass sich durch deren Zusammenfügen und Verkleben ein selbsttragender Kasten aus dem ersten Keramikmaterial ergibt. An ihrer Oberseite besitzt die innere Brennkammer 48 eine Vielzahl von Löchern 50 (im bevorzugten Ausführungsbeispiel sind es 6). Des Weiteren ist in einer Seitenwand ein größeres Loch 52 angeordnet, durch das die flammenführenden Teile des Brenners 28 in den Innenraum 26 hineinragen.

Mit der Bezugsziffer 54 ist in Fig. 2 ein Stahlmantel bezeichnet, der die innere Brennkammer 48 gasdicht umgibt. Lediglich im Bereich der Öffnungen 50, 52 besitzt der Stahlmantel 54 entsprechende Öffnungen.

Am Stahlmantel 54 sind die Anschlussstutzen 32 angeschweißt, die im eingebauten Zustand der Brennkammer 24 in die Abgasleitungen 22 hineinragen. Die Anschlussstutzen 32 sind dabei rohrförmige Abschnitte, deren oberes freies Ende 56 über den oberen Rand der Brennkammer 24 hinausragt, um das Einstecken in die Abgasleitungen 22 zu ermöglichen. Die unteren Enden 58 der Anschlussstutzen 32 enden im Bereich des Stahlmantels 54, d.h. sie ragen nicht in den Innenraum 26 der Brennkammer 24 hinein. Im bevorzugten Ausführungsbeispiel erreichen die unteren Enden 58 der Anschlussstutzen 32 nicht einmal das erste Keramikmaterial 46. Vielmehr enden die unteren Enden 58 der Anschlussstutzen 32 nur so weit unterhalb des Stahlmantels 54, dass ein einfaches Anschweißen möglich ist. Durch diese Ausbildung sind die Anschlussstutzen 32 dem direkten Zugriff der Flammen 30 entzogen, ebenso wie der erste Stahlmantel 54.

Zwischen den Keramikplatten 46 und dem Stahlmantel 54 ist ein keramikhaltiges Dämpfungsmaterial 60 raumfüllend angeordnet. Bevorzugt handelt es sich dabei um die schon erwähnte Carbowool®. Das Dämpfungsmaterial 60 umgibt die innere Brennkammer 48 vollständig mit Ausnahme von Löchern, die koaxial und kongruent zu den Löchern 50, 52 vorgesehen sind.

Das äußere Gehäuse der Brennkammer 24 wird von einem zweiten Stahlmantel 62 gebildet, an dessen Außenseite zudem ein Anschlussflansch zum Befestigen des Brenners 28 angeordnet ist. Wie in Fig. 2 dargestellt, liegt der Anschlussflansch 64 koaxial zu der Öffnung 52. Zwischen dem ersten Stahlmantel 54 und dem zweiten Stahlmantel 62 befindet sich eine weitere raumfüllende Lage an Dämpfungsmaterial, die in Fig. 2 mit der Bezugsziffer 66 bezeichnet ist. Mit der Bezugsziffer 68 sind schließlich Haken bezeichnet, an denen die Brennkammer 24 im Gehäuse 12 des Backofens 10 aufgehängt und montiert werden kann.

Die Figuren 3 bis 5 zeigen die verschiedenen Zwischenstufen beim Herstellen der Brennkammer 24 in perspektivischer Darstellung. In Fig. 3 ist die innere Brennkammer 48 gezeigt, die durch Zusammenfügen und Verkleben der Keramikplatten 46 gebildet wird. In dem bevorzugten Ausführungsbeispiel besitzen die Keramikplatten 46 eine Materialstärke von etwa 30 mm und als Material wird ein Keramikschaum verwendet, der unter der Bezeichnung AV 60 G plattenweise erhältlich ist. Die Platten lassen sich relativ einfach auf die gewünschte Größe zuschneiden.

Fig. 4 zeigt die innere Brennkammer 48, nachdem der erste Stahlmantel 54 mit den Anschlussstutzen 32 angebracht wurde. Wie in der Darstellung in Fig. 2 zu erkennen, besitzt der erste Stahlmantel 54 ein topfförmiges Oberteil, das mit einem Bodenteil 70 im Bereich der Stellen 72 verschraubt und/oder verschweißt wird. Des Weiteren ist in den Darstellungen in Fig. 2 und 4 zu erkennen, dass die Anschlussstutzen 32 sich nach oben hin verjüngen, d.h. am oberen Ende 32 einen geringeren Außendurchmesser aufweisen als im mittleren oder unteren Bereich. Hierdurch wird das gasdichte Einsetzen der Anschlussstutzen 32 in die Abgasleitungen 22 erleichtert.

Fig. 5 zeigt die modulartige Brennkammer 24 nach dem Anordnen des Dämpfungsmaterials 66 und dem anschließenden Anbringen des zweiten Stahlmantels 62. Um eine Beschädigung der Anschlussstutzen 32 beim separaten Transport und/oder Einbau der Brennkammer 24 zu vermeiden, ist auf der Oberseite eine Haube 74 angeordnet, die nur die oberen freien Enden 56 der Anschlussstutzen 32 herausragen lässt. Unterhalb der Haube 74 ist der verbleibende Hohlraum ebenfalls mit Dämpfungsmaterial 66 ausgefüllt.

## Patentansprüche

1. Backofen, insbesondere für eine mobile Feldküche, mit einem Backraum (14) zur Aufnahme von Gargut und mit einem Brenner (28) als Heizquelle zum Aufheizen des Backraums (14), wobei flammenführende Teile des Brenners (28) im Innenraum (26) einer vom Backraum (14) räumlich getrennten Brennkammer (24) angeordnet sind, **dadurch gekennzeichnet, dass** der Innenraum (26) mit einem ersten Keramikmaterial (46) ausgekleidet ist.

2. Backofen nach Anspruch 1, **dadurch gekennzeichnet, dass** die Brennkammer (24) als modulartiges Austauschteil ausgebildet ist.

3. Backofen nach Anspruch 1 oder 2, **dadurch gekennzeichnet, dass** der Innenraum (26) der Brennkammer (24) von Keramikplatten (46) umgrenzt wird, die eine Wandstärke von zumindest 5 mm, bevorzugt von etwa 30 mm bis 50 mm, aufweisen.

4. Backofen nach Anspruch 3, **dadurch gekennzeichnet, dass** die Keramikplatten (46) eine selbsttragende innere Brennkammer (28) ausbilden, wobei sie vorzugsweise miteinander verklebt sind.

5. Backofen nach einem der Ansprüche 1 bis 4, **dadurch gekennzeichnet, dass** das erste Keramikmaterial (46) von einem Dämpfungsmaterial (60) umgeben ist.

6. Backofen nach einem der Ansprüche 1 bis 5, **dadurch gekennzeichnet, dass** die Brennkammer (24) einen geschlossenen ersten Stahlmantel (54) aufweist.

7. Backofen nach Anspruch 5 und 6, **dadurch gekennzeichnet, dass** das Dämpfungsmaterial (60) zwischen dem ersten Keramikmaterial (46) und dem ersten Stahlmantel (54) angeordnet ist, und zwar vorzugsweise raumfüllend.

8. Backofen nach Anspruch 6 oder 7, **dadurch gekennzeichnet, dass** der erste Stahlmantel (54) zumindest einen Anschlussstutzen (32) zum Anschließen einer Abgasleitung (22) aufweist.

9. Backofen nach Anspruch 8, **dadurch gekennzeichnet, dass** der Anschlussstutzen (32) ein oberes freies Ende (56) und ein unteres Ende (58) aufweist, wobei das untere Ende (58) im Bereich des ersten Stahlmantels (54) liegt.

10. Backofen nach Anspruch 8 oder 9, **gekennzeichnet durch** zumindest eine Abgasleitung 22), in die der zumindest eine Anschlussstutzen (32) eingesteckt ist.

11. Backofen nach einem der Ansprüche 1 bis 10, **dadurch gekennzeichnet, dass** die Brennkammer (24) einen zweiten Stahlmantel (62) besitzt, an dessen Außenseite der Brenner (28) befestigt ist.

12. Backofen nach einem der Ansprüche 1 bis 11, **gekennzeichnet durch** eine, bevorzugt mehrere Abgasleitungen (22), die von der Brennkammer (24) **durch** einen Teilbereich (20) des Backraums (14) gasdicht hindurchgeführt sind.

13. Backofen nach einem der Ansprüche 1 bis 12, **dadurch gekennzeichnet, dass** die Brennkammer (24) unterhalb des Backraums (14) angeordnet ist.
